# EUROPEAN PATENT SPECIFICATION

(11) **EP 3 173 513 B1**
(45) Date of publication and mention of the grant of the patent: **13.05.2020**
(21) Application number: 16206156.8
(22) Date of filing: 11.06.2013
(51) Int. Cl.: D06F 39/00, A47L 15/42, D06F 39/08, D06F 58/20

(54) **WASHING MACHINE**
WASCHMASCHINE
MACHINE À LAVER

(43) Date of publication of application: 31.05.2017
(62) Divisional of application: 13729934.3
(73) Proprietor: Electrolux Appliances Aktiebolag, 105 45 Stockholm (SE)
(72) Inventor: VIGNOCCHI, Massimiliano, 33080 Porcia (IT); CAVARRETTA, Francesco, 33080 Porcia (IT)
(74) Representative: Electrolux Group Patents

(56) References cited:
- EP-A1- 2 309 052
- EP-A1- 2 692 937
- EP-A2- 2 465 405

## Description

The present invention relates to a washing machine for washing goods as, for example, a dish washing machine or a laundry washing machine.

In the present application the washing machine can be a washing machine or a washing-drying machine (i.e. a washing machine which can both wash and dry the goods).

In a washing machine, it is known to use an electric heater to heat water in a washing chamber.

In order to save energy consumption, it is also known to use a heat pump in place of or besides the electric heater for heating the water.

EP 2 096 203 discloses a household washing machine comprising a tub, a heater and a container. The container contains waste water (i.e. used process water) of a previous process phase (e.g., washing or rinsing phase). The household washing machine also comprises a heat pump comprising an evaporator thermally coupled to the container, a condenser, a compressor and an expansion valve. A heat pump medium is pumped from the compressor to the condenser, where liquefaction takes place accompanied by release of heat. The released heat is used to warm process water contained in the tub. From the condenser the medium passes via the expansion valve to the evaporator where the medium evaporates whilst absorbing heat from the waste water contained in the container. From the evaporator the medium runs back to the compressor. At the end of each process phase, the waste water is drained away from the tub into a waste water line via the container wherein the cooled waste water is replaced.

EP 2 224 049 discloses a cleaning device comprising a tub, a waste water tank for intermediate storage of waste water from the tub, a heat pump for extracting heat from the waste water tank and supplying it to process water in the tub, and a controller configured to partially freeze the waste water in the waste water tank and to melt at least part of the ice located in the waste water tank by supplying process water from the tub towards the end of a washing process.

EP 2 206 824 discloses a household appliance comprising a tub, a tank filled with liquid and a heat pump for extracting heat from the liquid contained in the tank and supplying the heat to the tub. The tank is a closed tank whose content is not changed within the framework of the normal process carried out by the household appliance. EP 2 206 824 states that a heat exchanger can be provided between a waste water line and the tank in order to transfer heat from the waste water into the liquid tank.

The Applicant observes that, during operation of the heat pump in the prior art appliances, the water present in the tank is cooled down with respect to a starting temperature and, optionally, at least partially, frozen. The cooled/frozen water needs to be regenerated, that is warmed up again towards the starting temperature, in order to be used again for a next, optionally immediately subsequent, process cycle. Indeed, too cold or frozen water does not allow an optimal heat exchange during the subsequent washing cycle, hindering the appliance's performances. In case of ice generation, it is preferable that all the ice is melted before the next process cycle is started.

EP 2 096 203 and EP 2 224 049 disclose to use waste water of a previous process phase to replace the cooled waste water in the tank. However, as waste water is used, dirt deposition and/or bacteria proliferation can occur in the tank.

In order to avoid contamination of the tank with deposits from waste water from the tub, EP 2 206 824 discloses to use a closed tank and a heat exchanger between a waste water line and the closed tank in order to transfer heat from the waste water into the liquid contained in the tank.

However, the Applicant observes that this solution provides low performances in terms of cooled/frozen water regeneration in the tank.

In particular, with respect to the solution wherein the cooled/frozen water is regenerated by replacement with waste water from a previous process phase, this solution might take longer time to regenerate the cooled/frozen water and might not be able to guarantee full regeneration.

EP 2 465 405 A2 discloses a dishwasher having a tub for accommodating dishes, and a process water circulation part e.g. circulation pump and circulation lines, washing the dishes with process water. Heat from a tank is transferred to the process water with a heat pump. A descaling device descales the process water, and a salt reservoir regenerates the descaling device. A recycled water storage part guides a predetermined amount of fresh water from the reservoir after filling water up to a retention level. A connecting line is connected between the storage part and the tank. The heat pump comprises a compressor, a condenser, an expansion valve and an evaporator.

EP 2 309 052 A1 discloses a method for recovering energy from the heat of waste water of a water-bearing domestic appliance. The method involves guiding the waste water by a heat transmitting device comprising a heat pipe, a heat pump or a thermoelectric generator. The heat of the heat transmitting device, is withdrawn by moving the waste water. The waste water is guided in a closed waste water circulation circuit by the heat transmitting device. A dishwasher or a washing machine with a waste water pump are also disclosed.

EP 2 149 767 A1 discloses a heat pump device, particularly adapted for use in connection with a clothes drying machine or a machine intended to heat up a mass of water, comprising an electric heater adapted to transfer thermal energy to a refrigerant medium in a portion of a closed-loop circuit, through which said refrigerant medium is intended to flow, extending form an evaporator means and a compressor; the electric heater comprises a fluid-tight casing provided with attachment end portions adapted to be connected to a pipe, and contains at least a heating element adapted to be submerged by said refrigerant medium.

EP 2 692 937 A1 discloses a washing machine comprising a chamber for receiving goods to be washed, a tank adapted to contain a liquid, a heat pump comprising a first heat exchanger, a second heat exchanger, a compressor and a pressure lowering device forming a circuit comprising a heat transfer fluid, the first heat exchanger being adapted to cool said heat transfer fluid and to heat water to be used in the chamber, the second heat exchanger being adapted to heat said heat transfer fluid and to cool the liquid contained in the tank, the tank is fluidly connected to water mains by means of a conduit configured so as to supply tap water from the water mains to the tank bypassing the chamber. The washing machine furhter comprises a control unit that can be configured to carry out cooled/iced liquid regeneration in the tank once or more times during a same operation cycle of the heat pump. The control unit can be configured so that cooled/iced liquid regeneration is performed during operation of the heat pump, at an intermediate time between a starting time and an ending time of the operation of the heat pump. Said intermediate time can be predefined by the washing machine manufacturer or can be identified in cooperation with a suitable sensor. For example, said intermediate time can correspond to a predetermined degree of ice formation in the tank.

It is an object of the invention to provide an alternative washing machine with a heat pump.

It is a further object of the invention to provide a washing machine with a heat pump that has a cooled/frozen fluid regeneration in the tank with enhanced performances.

It is a further object of the invention to provide a washing machine with a heat pump that has an efficient cooled/frozen fluid regeneration in the tank in terms of electrical energy consumption and water consumption.

It is another object of the invention to provide an improved washing machine with a heat pump that has improved design and construction, high reliability and long lifetime.

The Applicant found that the above objects are achieved by a washing machine comprising a chamber for receiving goods to be washed; a heat pump associated with a tank adapted to contain a fluid, which is fluidly connected to water mains by means of a conduit that bypasses the chamber; and a control unit configured to manage fluid regeneration in the tank by managing entry of tap water from the water mains into the tank, and to limit to N the number of fluid regeneration cycles that can be performed during a same operation cycle of the heat pump, with N integer at least equal to 1.

The use of a tank which is directly fluidly connected to water mains, that is by means of a conduit that bypasses the chamber, enables to regenerate cooled/frozen fluid in the tank by replacement with clean tap water.

This enables to improve the efficiency of cooled/frozen fluid regeneration with respect to the closed tank solution described by EP 2 206 824.

In addition, with respect to the solution discosed by EP 2 096 203 and EP 2 224 049 making use of waste water from the tub, the use of a tank which is directly fluidly connected to the water mains avoids the risk of contamination with deposits and/or bacteria from waste water. This enable to improve the reliability of the washing machine and to lengthen its lifetime.

Furthermore, the tank which is directly fluidly connected to water mains enables to perform the regeneration of cooled/frozen fluid in the tank during operation of the heat pump, and not only at the end of a process cycle of the washing mashine by using waste water coming from said process cycle. This is advantageous because it enables to provide the tank with new "warm water" (that is tap water having a higher temperature than that of the cooled/frozen fluid in the tank) that acts as new energy source for the heat pump, during operation of the heat pump.

Therefore, the heat pump efficiency is further increased and store of frozen fluid in the tank is reduced. In addition, the size of the tank can be reduced, thereby improving the design and construction of the washing machine. Furthermore, by performing cooled/frozen fluid regeneration in the tank during operation of the heat pump, it is possible to perform subsequent heat pump operation cycles, one immediately after the other. Moreover, if needed, reduction of frozen fluid storage in the tank may enable to perform longer heat pump operation cycles.

Moreover, the feature that the control unit is configured to limit to N the number of fluid regeneration cycles that can be performed within a same operation cycle of the heat pump advantageously enables to restrict tap water consumption and to arrive at a compromise between electrical energy consumption and tap water consumption when the working conditions of the washing machine would require multiple fluid regeneration cycles with tap water within a same operation cycle of the heat pump (e.g. in case of low ambient temperature, high goods loading into the chamber and/or high temperature process cycles).

Accordingly, in a first aspect the present invention relates to a washing machine comprising:
- a chamber for receiving goods to be washed,
- a tank adapted to contain a fluid,
- a heat pump comprising a first heat exchanger, a second heat exchanger, a compressor and a pressure lowering device forming a circuit comprising a refrigerant, the first heat exchanger being thermally coupled with the water to be used in the chamber and being adapted to cool said refrigerant and to heat said water to be used in the chamber, the second heat exchanger being thermally coupled to the tank and being adapted to heat said refrigerant and to cool the fluid contained in the tank,
- the tank is fluidly connected to water mains by means of a conduit configured so as to supply tap water from the water mains to the tank bypassing the chamber; and
- the washing machine further comprises a control unit configured to carry out a fluid regeneration cycle in the tank by managing entry of tap water from the water mains into the tank when a predetermined regeneration condition is met,
   characterized in that:
   if said predetermined regeneration condition is met a number N of times during a same operation cycle of the heat pump, the control unit is configured to disable fluid regeneration with tap water till said same operation cycle is terminated, whereby the number of fluid regeneration cycles that can be performed during a same operation cycle of the heat pump is limited to N, with N integer at least equal to 1.

Preferably, N ≤ 5. More preferably, N ≤ 2. Even more preferably, N=1.

Preferably, the tank has an input fluidly connected to the water mains by means of said conduit.

The fluid connection of the tank to the water mains can include connection to cold water tap and/or hot water tap so as to supply to the tank "cold" tap water (that is at ambient temperature, for example from about 15 to 20 °C) or hot tap water (for example, from about 30 to 50 °C). Connection to hot water tap can advantageously increase the heat pump efficiency.

In case of connection to hot water tap, the control unit can be advantageously configured so as to guarantee that fluid regeneration is performed by hot water at a given hot temperature. This can be achieved by managing, i. e. controlling, tap water entry/exit into/from the tank for a predetermined time or by monitoring the tap water temperature, taking into account that a predetermined time is needed for the water coming from the hot water tap to reach a desired hot temperature.

Preferably, the control unit is configured to carry out said fluid regeneration cycle in the tank by controlling exit of at least part of the fluid from the tank.

Preferably, said regeneration condition is selected from the group comprising the following regeneration conditions: reaching a first level of fluid freezing within the tank; lapse of a predetermined heat pump operation time; and reaching a predetermined temperature level by the water to be used in the chamber. Said temperature level can depend on the washing program selected by the user and/or on the water amount filled in the chamber. For example, in case of a washing program at a predefined desired washing temperature (e.g. 60 °C), said temperature level can be set to at least one lower value (e.g. to 30 °C or first to 30 °C and then to 50°C).

Preferably, said first level of fluid freezing corresponds to a situation wherein the fluid is partially frozen within the tank (e.g. 20 - 60%).

The control unit is preferably configured to carry out said fluid regeneration cycle during operation of the heat pump (that is, while the compressor is switched-on).

Preferably, said predetermined regeneration condition is set so that said fluid regeneration cycle is performed during an operation cycle of the heat pump.

As stated above, carrying out fluid regeneration cycles during operation of the heat pump is advantageous because it enables to improve the heat pump efficiency, to reduce frozen fluid formation and to reduce the size of the tank. In addition, in some embodiments, by eliminating the need of performing cooled/frozen fluid regeneration after the heat pump is switched off, it can enable to perform subsequent heat pump operation cycles, one immediately after the other. Moreover, if needed, reduction of frozen fluid formation in the tank may enable to perform longer heat pump operation cycles.

The control unit is preferably configured to carry out a further fluid regeneration cycle after the heat pump (i.e the compressor) is switched off (that is, after a heat pump operation cycle).

In a preferred embodiment, the control unit is configured to perform said further fluid regeneration cycle each time the heat pump is switched off or if a predetermined condition is met at the switching off of the heat pump.

According to an embodiment, the tank is also fluidly connected to the chamber. The tank can be, for example, fluidly connected to the chamber by means of a conduit configured so as to supply water from the chamber to the tank.

In this embodiment, the control unit is preferably configured to perform said further fluid regeneration cycle by managing entry of waste water from the chamber. This advantageously enables to regenerate cooled/frozen fluid in the tank with waste water coming from washing and/or rinsing cycles, which is at a higher temperature than cold tap water, thereby increasing fluid regeneration efficiency and limiting tap water consumption.

In this embodiment, the control unit is preferably configured to make a fluid regeneration cycle and/or cleaning cycle (only cleaning when there is not cooled/frozen fluid in the tank to be regenerated) with tap water from water mains after a predetermined number of fluid regeneration cycles with water from the chamber is performed; upon a user command; and/or after lapse of a predetermined operating time of the washing machine (e.g. once a year). This advantageously enables to clean the tank from dirt deposition and/or bacteria proliferation that can occur in the tank when water from the chamber is used to perform fluid regenarion cycles.

According to another embodiment, the control unit is configured to perform said further fluid regeneration cycle after the heat pump is switched off by managing entry of tap water from water mains. This advantageously enables to avoid dirt deposition and/or bacteria proliferation that can occur in the tank if water from the chamber is used to perform fluid regenarion cycles. In addition, it enables to immediately perform the further fluid regeneration cycle after the heat pump is switched off, without awaiting that regeneration is performed by means of heat transfer from external ambient, from waste water coming from the chamber at the end of a process cycle of the washing mashine and/or from electronic components and heated elements inside the machine.

Suitably, fluid regeneration cycles in the tank are performed so as to melt at least in part any frozen fluid formation in the tank and to replace at least in part cooled fluid in the tank with tap water at a higher temperature.

Preferably, when the heat pump is on, fluid regeneration cycles in the tank are performed so as to partially melt any frozen fluid formation in the tank and to at least partially replace cooled fluid in the tank with tap water at a higher temperature.

Preferably, when the heat pump is off, fluid regeneration cycles in the tank are performed so as to almost completely melt any frozen fluid formation in the tank and to almost completely replace cooled fluid in the tank with tap water at a higher temperature.

Exit of at least part of the fluid from the tank can be performed before, after or at the same time of the entry of water into the tank.

In a preferred embodiment, the control unit is configured to manage fluid regeneration cycles in the tank so that exit of at least part of the fluid from the tank is performed after the entry of water into the tank. In this way, the newly entered water is given the time to transfer heat to the cooled/frozen fluid in the tank before being discharged.

Preferably, exit of at least part of the fluid from the tank is performed after a predetermined time the water is entered into the tank; when a predetermined thermal equilibrium is reached within the tank, after water entry; and/or when the fluid level in the tank reaches a predetermined value. Said conditions can be detected by means of a suitable sensor (e.g. a temperature sensor, a level sensor or a timer).

Suitably, the control unit is configured to switch the heat pump on by switching the compressor on.

Suitably, the control unit is configured to switch the heat pump off by switching the compressor off.

Suitably, the control unit is configured to operate the heat pump (that is, to switch the compressor on) again when another operation cycle of the heat pump has to be performed.

In a preferred embodiment, the control unit is configured to operate the heat pump so that the fluid in the tank is at least partially freezed. In this way, the latent heat of the phase transition from liquid to solid is advantageously used and the heat pump efficiency is improved.

Preferably, the control unit is configured to operate the heat pump (that is, to switch the compressor on and to keep it on) till a predetermined operating condition is met. When the predetermined operating condition is met, the control unit is preferably configured to switch the heat pump (that is, the compressor) off.

Said operating condition can be preferably selected from the group comprising the following operating conditions: desired temperature reached by the water to be used in the chamber; second level of fluid freezing reached within the tank; predetermined temperature value reached by the refrigerant in a portion of the circuit of the heat pump between the compressor outlet and the pressure lowering device input; and end of predetermined operation time. In a preferred embodiment, the heat pump is operated till a first one of at least two of said operating conditions (desired temperature reached by the water to be used in the chamber, second level of fluid freezing reached by the fluid in the tank, predetermined temperature value reached by the refrigerant in a portion of the circuit of the heat pump between the compressor outlet and the pressure lowering device input, and end of predetermined operation time) is met.

The check of a predetermined temperature value reached by the refrigerant in a portion of the circuit of the heat pump between the compressor outlet and the pressure lowering device input can be performed by means of at least one sensor (e.g. a temperature sensor). Said at least one sensor is preferably positioned at the compressor outlet and/or at the outlet of the first heat exchanger.

This check advantageously enables to switch the heat pump off when the refrigerant at the compressor reaches too high temperature values that could decrease the heat pump efficiency and/or impair the compressor.

The second level of fluid freezing can be equal to or different from said first level of fluid freezing.

When the first level of fluid freezing is equal to the second level of fluid freezing, it corresponds to a situation wherein the fluid is at least partially frozen (e.g. from about 20% to about 100%) within the tank 30.

When, the second level of fluid freezing is different from the first level of fluid freezing, it is preferably higher than the first level of fluid freezing.

When said second level of fluid freezing is higher than said first level of fluid freezing, the first level of fluid freezing preferably corresponds to a situation wherein the fluid is partially frozen (e.g. 20 - 60%) within the tank 30 and the second level of fluid freezing preferably corresponds to a situation wherein the fluid is almost completely frozen within the tank. In this case, the check about the second level of fluid freezing reached within the tank advantageously enables to switch the heat pump off when the fluid is almost completely frozen within the tank (for example when regeneration cycles during operation of the heat pump have been disabled by the control unit after N regeneration cycles performed within a same heat pump operation cycle).

In a preferred embodiment, the washing machine comprises an electrical heater adapted to heat the water to be used in the chamber. The electrical heater can be suitably positioned on the bottom of the chamber. The control unit can be configured to operate the electrical heater during operation of the heat pump or when the heat pump is switched off.

When the heat pump is switched off before a desired temperature is reached by the water to be used in the chamber, the control unit is preferably configured to switch the electrical heater on till the desired temperature is reached.

In a preferred embodiment, the washing machine further comprises at least one sensor configured to detect frozen fluid formation within the tank.

Preferably, the control unit is operatively connected to said at least one sensor in order to determine if said first level of fluid freezing has been reached within the tank.

Preferably, the control unit is operatively connected to said at least one sensor in order to determine if said second level of fluid freezing has been reached within the tank.

In an embodiment the at least one sensor comprises a level sensor configured to detect the level of the fluid within the tank.

In an embodiment the at least one sensor comprises a temperature sensor configured to detect the temperature of the fluid at a suitable position within the tank.

In an embodiment the at least one sensor comprises an electrical conductivity sensor configured to detect the electrical conductivity of the fluid at a suitable position within the tank.

In an embodiment the at least one sensor comprises a temperature sensor configured to detect the temperature of the refrigerant flowing through the second heat exchanger. In this case, the at least one sensor can be positioned at the output and/or at the input of the second heat exchanger.

The second heat exchanger is thermally coupled to the tank.

In an embodiment, the second heat exchanger can be arranged within the tank.

In a preferred embodiment, the first heat exchanger comprises a tube arrangement adapted to deliver heat.

In a preferred embodiment, the second heat exchanger comprises a tube arrangement adapted to aborb heat.

In an embodiment, the refrigerant is adapted to condense inside the first heat exchanger and to evaporate inside the second heat exchanger.

In this embodiment, the first heat exchanger is a condenser and the second heat exchanger is an evaporator.

In another embodiment, the refrigerant can be of the type that operates nonconventional cycles, as for instance carbon dioxide, that does not undergo a phase change (i.e., condensation and evaporation) in the first heat exchanger and second heat exchanger.

The refrigerant is circulated through the closed circuit of the heat pump.

The first heat exchanger is advantageously thermally coupled to the water to be used in the chamber.

In an embodiment, the first heat exchanger is thermally coupled to the chamber. For example, the first heat exchanger can be arranged inside the chamber, preferably on the bottom of the chamber.

In another embodiment, the first heat exchanger is thermally coupled to a water circuit conducting the water into the chamber.

In an embodiment, the water circuit is a recirculation circuit adapted to drain water from the chamber and to return it back into the chamber at another location. Suitably, the recirculation circuit comprises a pump and a pipe arrangement. In this embodiment, the first heat exchanger can be thermally connected to the pump and/or the pipe arrangement. This solution, enables to recirculate the water through the recirculation circuit, which is thermally coupled to the first heat exchanger, till a desired process temperature is reached.

In another embodiment, the first heat exchanger is thermally coupled to a water circuit adapted to draw water directly from the water mains, bypassing the chamber, and to deliver it into the chamber (without recirculation). In this embodiment, the tap water from water mains is heated by the first heat exchanger before entering the chamber. The first heat exchanger thus operates only on tap water.

Suitably, the washing machine comprises a water outlet circuit for discharging waste water (i.e. used water) from the chamber. The water outlet circuit is advantageously fluidly connected to the bottom of the chamber.

The water outlet circuit can comprise a draining pump and draining pipes, adapted for discharging waste water from the chamber after process cycles (e.g. washing, rinsing cycles).

Advantageously, the tank has an output for draining away at least part of cooled fluid from the tank.

Advantageously, the output of the tank is fluidly connected to the water outlet circuit in order to drain away at least part of cooled fluid from the tank via the water outlet circuit.

According to another embodiment, the output of the tank is fluidly connected to a dedicated fluid outlet circuit (that is to a fluid outlet circuit free of fluid connection with the water outlet circuit).

According to an embodiment, the tank is thermally coupled to the water outlet circuit (e.g. to said draining pump and/or to said draining pipes). This advantageously enables to transfer heat from the waste water flowing through the water outlet circuit to the fluid contained in the tank thereby improving regeneration of the cooled/frozen fluid in the tank. The thermal coupling can be achieved, for example, by means of a heat exchanger, as for example by placing the draining pipes in contact with the tank.

The control unit is advantageously configured so as to control operation of the washing machine.

The washing machine can be a dish washing machine or a laundry washing machine.

In case of a laundry washing machine, during a washing cycle the washing water is heated up and the laundry is agitated (tumbled).

According to an embodiment, the washing machine can be a washing-drying machine for both washing and drying goods.

In a second aspect the present invention relates to a method of fluid regeneration in a washing machine comprising a chamber for receiving goods to be washed, a fluid tank, and a heat pump comprising a first heat exchanger, a second heat exchanger, a compressor and a pressure lowering device forming a circuit comprising a refrigerant, the method comprising:
- operating the heat pump so as to cool said refrigerant and to heat water to be used in the chamber by means of said first heat exchanger, and to heat said refrigerant and to cool the fluid contained in the tank by means of the second heat exchanger,
- carrying out a fluid regeneration cycle for regenerating the cooled fluid in the tank by supplying tap water from water mains into the tank bypassing the chamber bypassing the chamber (10) when a predetermined regeneration condition is met, and
- if said predetermined regeneration condition is met a number N of times during a same operation cycle of the heat pump, disabling fluid regeneration till said same operation cycle is terminated, whereby limiting to N the number of fluid regeneration cycles that can be performed during a same operation cycle of the heat pump, with N integer at least equal to 1.

Advantageously, carrying out said fluid regeneration cycle comprises draining away at least part of the cooled fluid from the tank.

Draining away at least part of the cooled fluid from the tank can be performed before, after or at the same time of water supply to the tank. Draining away at least part of the cooled fluid from the tank can be performed after a predetermined time the water is supplied into the tank; when a predetermined thermal equilibrium is reached within the tank, after water supply; or when the fluid level in the tank reaches a predetermined value.

Said regeneration condition is preferably selected from the group comprising the following regeneration conditions: reaching a first level of fluid freezing within the tank, lapse of a predetermined heat pump operation time and reaching a predetermined temperature level for the water to be used in the chamber.

Preferably, said fluid regeneration cycle is carried out during an operation cycle of the heat pump.

Preferably, said predetermined regeneration condition is set so that said fluid regeneration cycle is performed during an operation cycle of the heat pump.

In an embodiment, a further fluid regeneration cycle is carried out after the heat pump is switched off, that is when the compressor is switched off.

In a preferred embodiment, said further fluid regeneration cycle is performed by transferring heat from waste water (e.g. washing or rinsing water) coming from the chamber to the fluid contained in the tank. Preferably, said transfer of heat is performed by managing entry of said waste water into the tank. In addition or in alternative, said transfer of heat is performed by thermally coupling the tank to the water outlet circuit.

In another embodiment, said further fluid regeneration cycle is performed by managing entry of tap water from water mains.

Suitably, operating the heat pump is performed by switching the compressor on.

Suitably, the heat pump is switched off by switching the compressor off.

Advantageously, the heat pump is operated till a predetermined operating condition is met. Thereafter, the heat pump (that is, the compressor) is switched off.

Said operating condition can be preferably selected from the group comprising the following operating conditions: desired temperature reached by the water to be used in the chamber; second level of fluid freezing reached within the tank; predetermined temperature value reached by the refrigerant in a portion of the circuit of the heat pump between the compressor outlet and the pressure lowering device input; and end of predetermined operation time.

In a preferred embodiment, the heat pump is operated till a first one of at least two of said operating conditions (desired temperature reached by the water to be used in the chamber, second level of fluid freezing reached by the fluid in the tank, predetermined temperature value reached by the refrigerant in a portion of the circuit of the heat pump between the compressor outlet and the pressure lowering device input, and end of predetermined operation time) is met.

Suitably, the heat pump (that is, the compressor) is operated (that is, switched-on) again for performing another operation cycle of the heat pump.

When the heat pump is switched off before a desired temperature is reached by the water to be used in the chamber, the method preferably further comprises heating said water to the desired temperature by means of an electrical heater.

Preferably, the method comprises detecting frozen fluid formation within the tank.

Detecting frozen fluid formation within the tank is preferably performed in order to determine if said first level of fluid freezing has been reached within the tank.

Detecting frozen fluid formation within the tank is preferably performed in order to determine if said second level of fluid freezing has been reached within the tank.

In an embodiment, detecting frozen fluid formation within the tank is performed by detecting the level of the fluid within the tank.

In an embodiment, detecting frozen fluid formation within the tank is performed by detecting the temperature of the fluid at a suitable position within the tank.

In an embodiment, detecting frozen fluid formation within the tank is performed by detecting the electrical conductivity of the fluid at a suitable position within the tank.

In an embodiment, detecting frozen fluid formation within the tank is performed by detecting the temperature of the refrigerant flowing through the second heat exchanger (preferably, at the input and/or output of the second heat exchanger).

Suitably, during a washing cycle of the washing machine (e.g. a washing cycle, a pre-washing cycle or a rinsing cycle), the method further comprises supplying water into the chamber.

In a third aspect the present invention relates to a washing machine comprising:
- a chamber for receiving goods to be washed,
- a tank adapted to contain a fluid,
- a heat pump comprising a first heat exchanger, a second heat exchanger, a compressor and a pressure lowering device forming a circuit comprising a refrigerant, the first heat exchanger being adapted to cool said refrigerant and to heat water to be used in the chamber, the second heat exchanger being adapted to heat said refrigerant and to cool the fluid contained in the tank,
characterized in that it further comprises at least one sensor configured to detect the temperature of the refrigerant that flows through the second heat exchanger and a control unit configured to carry out a fluid regeneration cycle in the tank and/or to switch the heat pump off in response to the temperature detected by said at least one sensor.

Preferably, said at least one sensor is positioned at the inlet and/or at the outlet of the second heat exchanger.

In a preferred embodiment, the washing machine further comprising a heater and the control unit is configured to switch the electrical heater on till a desired temperature is reached by the water to be used in the chamber, if the heat pump is switched off before said desired temperature is reached.

In a preferred embodiment, the tank is fluidly connected to water mains by means of a conduit configured so as to supply tap water from the water mains to the tank bypassing the chamber, and the control unit is configured to carry out the fluid regeneration cycle in the tank by managing entry of tap water from the water mains into the tank.

Preferably, the control unit is configured to carry out the fluid regeneration cycle in the tank when a predetermined regeneration condition is met and, if said predetermined regeneration condition is met a number N of times during a same operation cycle of the heat pump, the control unit is configured to disable fluid regeneration till said same operation cycle is terminated, whereby the number of fluid regeneration cycles that can be performed during a same operation cycle of the heat pump is limited to N, with N integer at least equal to 1.

Preferably, said control unit is configured to carry out the fluid regeneration cycle in the tank and/or to switch the heat pump off when the temperature detected by said at least one sensor reaches a value corresponding to a predetermined level of fluid freezing within the tank.

In an embodiment, said control unit is configured to carry out the fluid regeneration cycle in the tank when the temperature detected by said at least one sensor reaches a value corresponding to a first level of fluid freezing within the tank and to switch the heat pump off when the temperature detected by said at least one sensor reaches a value corresponding to a second level of fluid freezing within the tank, higher than said first level of fluid freezing.

Features and advantages of the present invention will be more readily understood from the from the following detailed description of some preferred embodiments thereof, which is given below by way of non-limiting example with reference to the accompanying drawings, in which:
- figure 1 schematically shows a washing machine according to the invention;
- figure 2 schematically shows an embodiment of the washing machine of figure 1;
- figure 3 schematically shows another embodiment of the washing machine of figure 1.

Like elements are denoted by like reference signs throughout the figures.

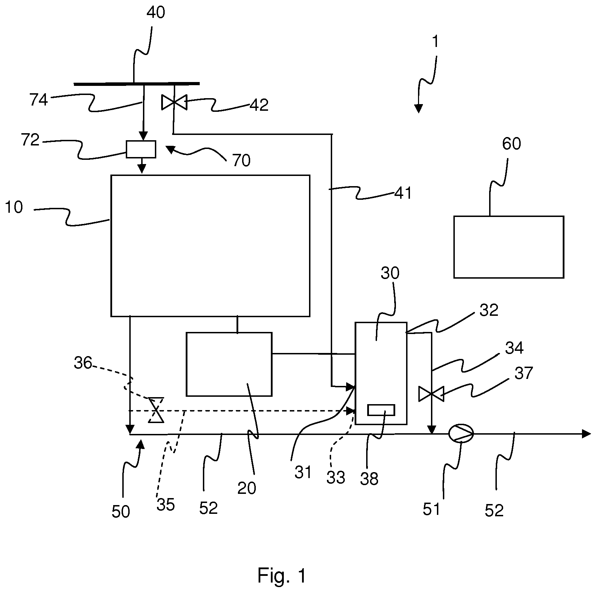

Figure 1 shows a washing machine 1 according to the invention, comprising a chamber 10 for treating goods, a tank 30 adapted to contain a fluid, a heat pump 20 adapted to heat water to be used in the chamber 10 and to absorb heat from the fluid contained in the tank 30.

The washing machine 1 also comprises a water outlet circuit 50 for discharging waste water (i.e. used water optionally mixed with washing products) from the chamber 10 after process cycles (e.g., washing, pre-washing, rinsing cycles).

The water outlet circuit 50 can comprise a draining pump 51 and draining pipes 52.

The water outlet circuit 50 is advantageously fluidly connected to the bottom of the chamber 10.

The tank 30 can be thermally coupled to the water outlet circuit 50 in order to transfer heat from waste water flowing through the pipes 52 into the fluid contained in the tank 30. According to an example (not shown), thermal coupling can be achieved by placing the draining pipes 52 into contact with the tank 30.

In addition or in alterative, the tank 30 can be thermally coupled to electronic components and heated elements inside the machine (not shown, as for example compressor, motor, inside air). The thermal energy released by these components can be transferred to the fluid in the tank 30 for example by natural convection, forced convection or conduction.

The washing machine 1 advantageously further comprises a water inlet circuit 70 adapted to supply water, that can be optionally mixed with washing products, into the chamber 10. The water inlet circuit 70 advantageously comprises a dispenser 72 and water inlet pipes 74.

The water inlet pipes 74 fluidly connect water mains 40 to the chamber 10 via the dispenser 72.

The dispenser 72 is adapted to be filled with products, for example detersives, softener, bleaching, sparkling/rinse aid substances, etc. The dispenser 72 can comprise one or more compartments (not shown) for one or more products from which a certain amount of these products, depending on the washing program, is delivered into the chamber 10.

According to the invention, the tank 30 has an input 31 which is directly fluidly connected to public water mains 40 in order to be able to directly receive tap water from it. The input 31 and the water mains 40 are suitably connected to each other through a tap water conduit 41, which is adapted to supply tap water from the water mains 40 to the tank 30 bypassing the chamber 10 (that is without making the tap water to pass through the chamber 10) in cooperation with a suitable valve 42.

The tap water conduit 41 can comprise one or more pipes suitably connected to each other.

According to an embodiment of the invention (shown in dotted line in the figures), the tank 30 has a further input 33 which is fluidly connected to the chamber 10 in order to be able to receive waste water from it. The further input 33 and the chamber 10 are suitably connected to each other through a waste water conduit 35 with a suitable valve 36.

The waste water conduit 35 can comprise one or more pipes suitably connected to each other.

It is noted that even if two different inputs 31, 33 are shown in the figures, a single input can also be provided to the tank 30.

The fluid contained in the tank 30 advantageously is water (tap water from water mains 40 and/or waste water from the chamber 10).

In the embodiment shown in the figures, the tank 30 has an output 32 fluidly connected to the water outlet circuit 50 in order to drain away cooled fluid from the tank 30 via the water outlet circuit 50. The output 32 and the water outlet circuit 50 are suitably connected through pipes 34 and a suitable valve 37.

The tank 30 is advantageously positioned on a bottom region of the washing machine 1.

The amount of fluid contained in the tank 30 and the volume of the tank 30 depend, for example, on the amount of water that must be heated up in the chamber 10 during a process cycle of the washing machine 1, the temperature required for the water, and the percentage of frozen fluid formed in the tank 30 during a heat pump cycle.

During operation of the heat pump 20, the fluid in the tank 30 can be moved by a pump or impeller (not shown) in order to increase the heat transfer coefficient.

The tank 30 comprises at least one sensor 38. As explained in mode detailed below, the at least one sensor 38 is configured to detect the status of the energy capacity of the fluid in the tank 30 and, in particular a first level of fluid freezing and a second level of fluid freezing.

The at least one sensor 38 can be a level sensor configured to detect the level of the fluid within the tank 30, a temperature sensor configured to detect the temperature of the fluid at a suitable position within the tank 30, an electrical conductivity sensor configured to detect the electrical conductivity of the fluid at a suitable position within the tank 30 or a temperature sensor configured to detect the temperature of the refrigerant flowing through an evaporator 24 of the heat pump 20.

Depending on the program design, heat pump power, and wash temperature, the heat pump 20 alone might be insufficient to heat up the water to the desired process temperature in the available time. Therefore, a conventional electrical heater (not shown) may be comprised in the washing machine 1 as well. The conventional electrical heater can be suitably positioned on the bottom of the chamber 10.

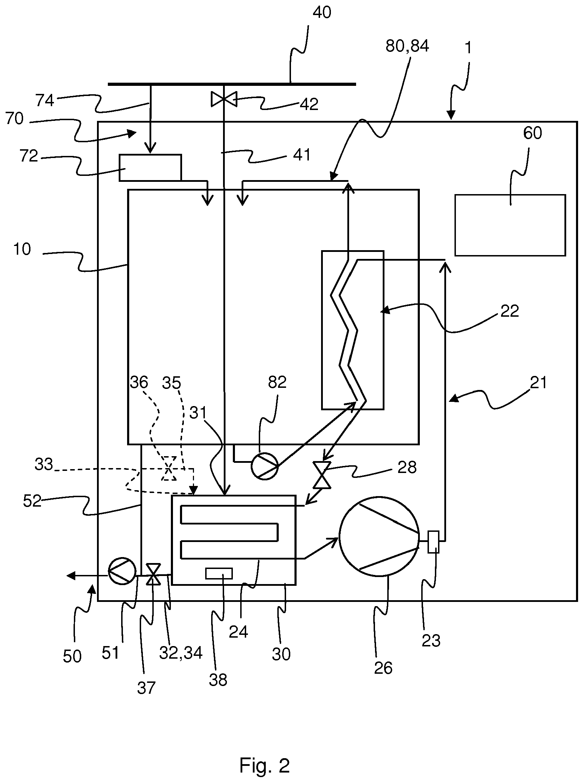

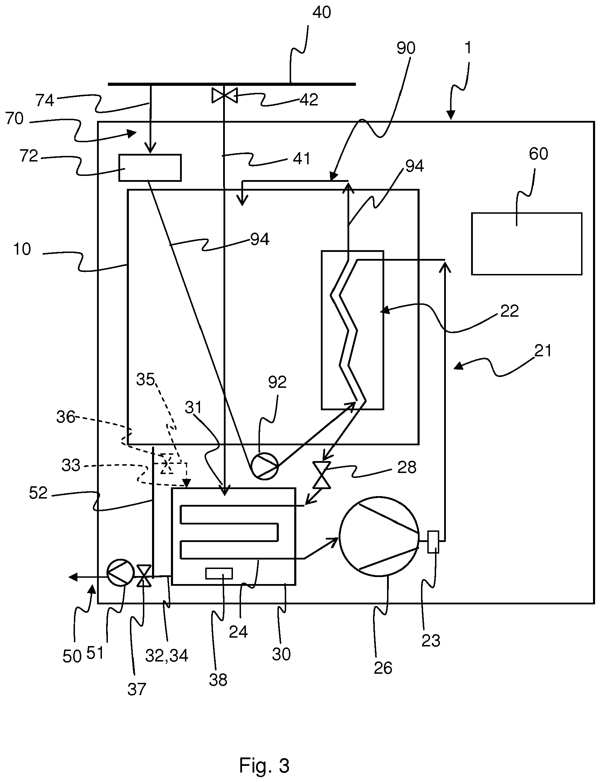

As shown in figures 2 and 3, the heat pump 20 suitably comprises a condenser 22, the evaporator 24, a compressor 26 and a pressure lowering device 28, such as an expansion valve.

The condenser 22, the evaporator 24, the compressor 26 and the pressure lowering device 28 form as a whole a closed conduit 21 filled with a refrigerant. During operation of the heat pump 20 (that is, when the compressor 26 is switched-on), heat is generated at the condenser 22 and cold is generated at the evaporator 24.

The refrigerant is pumped from the compressor 26 to the condenser 22, where liquefaction takes place accompanied by release of heat. The released heat is used to warm water to be used in the chamber 20. From the condenser 22 the refrigerant passes via the pressure lowering device 28 to the evaporator 24 where the refrigerant evaporates whilst absorbing heat from the fluid contained in the tank 30. From the evaporator 24 the refrigerant runs back to the compressor 26.

The evaporator 24 can comprise a pipe or a series of pipes properly shaped and immersed in the fluid contained in the tank 30.

Considering that during operation of the heat pump 20, ice (if any) is inclined to builds up around the evaporator 24, the input 31 (and, if present, the input 33) and the output 32 of the tank 30 are preferably positioned sufficiently far apart from the evaporator 24 so as to prevent any obstruction of the input 31 (and, optionally, 33) and output 32 due to ice formation.

The condenser 22 can be located within the chamber 10, preferably on a bottom region, or outside the chamber 10.

The condenser 22 is advantageously arranged so as to be able to heat the water to be used in the chamber 10.

The condenser 22 can be a tube-in-tube heat exchanger, a plate heat exchanger or similar. The water to be used in the chamber 10 is made to flow through the condenser 22 so that it exhanges energy with the refrigerant by forced convention. The water can be continuously recirculated by a pump through the condenser 22 and back to the chamber 10 until the desired temperature is reached or tap water can be heated directly, by flowing through the condenser 22, before entering into the chamber 10.

Figure 2 shows an embodiment of the washing machine 1 of figure 1 wherein the water is continuously recirculated through the condenser 22 and back to the chamber 10, until the desired temperature is reached, by means of a water circuit 80.

The water circuit 80 is a recirculation circuit adapted to drain water from the chamber 10 (for example from the bottom) and to return it back into the chamber 10 at another location (for example at an upper location) via the condenser 22. Suitably, the water circuit 80 comprises a pump 82 and pipes 84 fluidly connected to the condenser 22.

In the embodiment of figure 2, the condenser 22 is positioned inside the chamber 10.

Figure 3 shows another embodiment of the washing machine 1 of figure 1 wherein tap water is heated by the condenser 22 before entering into the chamber 10.

In the embodiment of figure 3, the washing machine 1 comprises a water circuit 90.

The water circuit 90 comprises a pump 92 and pipes 94 adapted to directly drain tap water from the water mains 40 bypassing the chamber 10, to conduct the tap water through the condenser 22 and then into the chamber 10, without recirculation. In order to guarantee that the desired process temperature is reached, the heat exchanger 22 and the flow rate of the water should be suitably sized. In this embodiment, the condenser 22 operates without being in contact with waste water.

As shown in figures 1-3, the washing machine 1 suitably comprises a control unit 60 configured to control operation of the washing machine 1 itself.

When the washing machine 1 is turned on in order to perform a predetermined washing program, water, optionally mixed with washing/rinsing products, is suitably supplied into the chamber 10 by means of the water inlet circuit 70.

The control unit 60 is configured to switch the heat pump 20 on any time water has to be heated into the chamber 10 in order to perform a process cycle (e.g., washing, pre-washing, rinsing, and similar) of the predetermined washing program.

The fluid in the tank 30 exchanges sensible heat during a cooling phase of the fluid and latent heat during a freezing phase (if any). The exploitation of the latent heat allows reducing the amount of fluid required and therefore the overall dimensions of the tank 30. Accordingly, the control unit 60 is advantageously configured to operate the heat pump 20 so that the fluid in the tank 30 is at least partially freezed.

As stated above, during operation of the heat pump 20 (that is while the compressor is switched-on), the fluid in the tank 30 is cooled down with respect to a starting temperature and, optionally, at least partially frozen. The cooled/frozen fluid needs to be regenerated, that is warmed up/melted towards the starting temperature, in order to be used again as energy source to the heat pump 20 in a next, optionally immediately subsequent, process cycle.

The control unit 60 is advantageously configured to carry out the method of cooled/frozen fluid regeneration according to the invention. This, with the purpose of melting any ice formation in the tank 30 and replacing at least part of the cooled fluid with tap water at a higher temperature. Indeed, temperature of "cold" tap water can range from about 15 to 20 °C, depending on the washing machine location (e.g. indoor or outdoor) and on the external ambient temperature. In addition, temperature of hot tap water can range from about 30 to 50 °C.

According to this method, cooled/frozen fluid regeneration in the tank 30 is performed by supplying tap water from the water mains 40 into the tank 30 bypassing the chamber 10 and draining away at least part of the cooled fluid from the tank 30.

Draining away at least part of the cooled fluid from the tank can be performed before, after or at the same time of water supply into the tank.

Suitably, the control unit 60 is configured to control start/stop of tap water entry from the water mains 40 into the tank 30 and start/stop of cooled water exit from the tank 30 into the water outlet circuit 50.

Starting/stopping tap water entry into the tank 30 can be performed by the control unit 60 by opening/closing the valve 42 associated with the input 31 of the tank 30.

Starting/stopping cooled water exit from the tank 30 can be performed by the control unit 60 by opening/closing the valve 37 associated with the output 32 of the tank 30 and by switching on/off the draining pump 51.

Each fluid regeneration cycle in the tank 30 can be performed for a predetermined time, depending upon a predefined condition to be met. For example, the control unit 60 can be configured to enable water entry and cooled water exit into/from the tank 30 for a predefined regeneration time or till a predefined status of the energy capacity of the fluid in the tank 30 (e.g. a predefined thermal condition detected by means of the sensor 38) is reached. According to another example, the control unit 60 can be configured so as to enable predetermined amount(s) of water to enter and to exit into/from the tank 30.

In a preferred embodiment, the control unit 60 is configured to perform regeneration of the fluid contained in the tank 30 any time a first level of fluid freezing within the tank is reached.

Preferably, the first level of fluid freezing corresponds to a situation wherein the fluid is partially frozen within the tank (e.g. 20 - 60%).

Preferably, the first level of fluid freezing is set so that at least one fluid regeneration cycle is performed during an operation cycle of the heat pump. As stated above, this is advantageous because it enables to improve the heat pump efficiency, to reduce frozen fluid formation and to reduce the size of the tank 30. In addition, in some embodiments, by eliminating the need of performing cooled/frozen fluid regeneration after the heat pump is switched off, it can enable to perform subsequent heat pump operation cycles, one immediately after the other.

In a preferred embodiment, when the first level of fluid freezing is reached within the tank and a heat pump cycle is running, a partial regeneration of the cooled/frozen fluid is performed in the tank 30. In particular, the amount of tap water supplyed to the tank 30 is preferably limited to a certain level so as to limit tap water consumption.

According to the invention, the control unit 60 is configured so that cooled/frozen fluid regeneration in the tank 30 can be performed no more than a number N of times during a same operation cycle of the heat pump 20.

Preferably, if the first level of fluid freezing is reached within the tank 30 N times during a same operation cycle of the heat pump, the control unit 60 is configured to disable fluid regeneration with tap water till said operation cycle is terminated.

This is advantageous in order to limit tap water consumption, especially when the washing machine is operated under unusual conditions such as low ambient temperature (when positioned, for example, in a cellar or outdoor), high load of goods in the chamber 10, and/or high temperature washing program. Indeed, in these situations, the first level of fluid freezing could be reached a plurality of times within the tank 30 within a same operation cycle of the heat pump 20, thus requiring multiple fluid regeneration cycles to be performed within a same operation cycle.

In a preferred embodiment, the control unit 60 is configured to switch the heat pump 20 off when a first one of the following operating conditions is met: desired temperature reached by the water to be used in the chamber 10; second level of fluid freezing reached within the tank 30; predetermined temperature value reached by the refrigerant in a portion of the circuit of the heat pump 20 between the compressor outlet and the pressure lowering device input; and end of predetermined operation time.

The predetermined temperature value reached by the refrigerant in the portion of the circuit of the heat pump 20 between the compressor outlet and the pressure lowering device input can be detected by at least one temperature sensor 23 positioned at the compressor outlet (as shown in figures 2 and 3) and/or at the condenser outlet.

The second level of fluid freezing can be equal to or different from the first level of fluid freezing.

When the second level of fluid freezing is equal to the first level of fluid freezing, it preferably corresponds to a situation wherein the fluid is at least partially frozen (e.g. from about 20% to about 100%) within the tank 30.

When, the second level of fluid freezing is different from the first level of fluid freezing, it is preferably higher than the first level of fluid freezing.

In this latter case, the first level of fluid freezing preferably corresponds to a situation wherein the fluid is partially frozen (e.g. 20 - 60%) within the tank 30 while the second level of fluid freezing corresponds to a situation wherein the fluid is almost completely frozen (about 100%) within the tank 30. The check about the second level of fluid freezing reached within the tank 30 advantageously guarantees that the heat pump 20 is switched off when the fluid is almost completely frozen within the tank due to the fact that regeneration cycles during operation of the heat pump 20 have been disabled by the control unit 60 after performing N regeneration cycles within a same heat pump operation cycle.

The first level of fluid freezing and the second level of fluid freezing can be detected by the sensor 38.

When the sensor 38 is a level sensor, the levels of fluid freezing can be detected according to three main reference points: " starting level", "first level" and "second level". At the beginning of a heat pump cycle of the washing machine 1, the tank 30 can be filled with tap water up to the "starting level" than the heat pump cycle starts and the fluid in the tank 30 begins cooling and freezing. Since the specific volume of the frozen fluid (ice) is greater than the one of the fluid (water), the sensor 38 detects an increase in the fluid level. The increase of the fluid level is proportional to the amount of fluid that has been frozen. When the fluid level reaches the "first level" or the "second level" the control unit 60 is adapted to intervene as explained above.

When the sensor 38 is a temperature sensor placed, in contact with the fluid, at a certain position between the evaporator 24 and the lateral walls of the tank 30, the levels of fluid freezing can be detected according to three main reference points: "starting temperature", "first temperature" (e.g. 2 °C, corresponding to the first level of fluid freezing) and "second temperature" (e.g. 1 °C, corresponding to the second level of fluid freezing). The frozen fluid formation in the tank 30 starts close to the evaporator 24 and then grows toward the walls of the tank 30. When the fluid in the tank 30 begins cooling and freezing, the fluid temperature detected by the sensor 38 starts decreasing with respect to the "starting temperature" to reach the "first temperature" and, optionally, the "second temperature". When the temperature reaches the "first temperature" or the "second temperature" the control unit 60 is adapted to intervene as explained above.

In this case, in order to increase the accuracy of the measurement, there can be provided two temperature sensors, placed at a two different distances from the evaporator 24, for respectively measuring the first level of fluid freezing (the one closer to the evaporator 24) and the second level of fluid freezing (the other one).

When the sensor 38 is an electrical conductivity sensor placed, in contact with the fluid, at a certain distance from the evaporator 24, the levels of fluid freezing can be detected according to three main reference points: "starting conductivity", "first conductivity" (corresponding to the first level of fluid freezing) and "second conductivity" (corresponding to the second level of fluid freezing). The frozen fluid formation in the tank 30 starts close to the evaporator 24 and then grows toward the walls of the tank 30. When the fluid in the tank 30 begins cooling and freezing, the electrical conductivity of the fluid detected by the sensor 38 starts decreasing with respect to the "starting conductivity" to reach the "first conductivity" and, optionally, the "second conductivity". When the electrical conductivity reaches the "first conductivity" or the "second conductivity" the control unit 60 is adapted to intervene as explained above.

When the sensor 38 is a temperature sensor configured to detect the temperature of the refrigerant at the exit and/or input of the evaporator 24, the levels of fluid freezing can be detected according to three main reference points: "working temperature" (e.g. from about -5 to -10 °C); "first temperature" (e.g. from about -8 to -12 °C and, in any case, below the "working temperature") corresponding to the first level of fluid freezing; and "second temperature" (e.g. from about -10 e -15 °C and, in any case, below the "working temperature" and the "first temperature" values), corresponding to the second level of fluid freezing. The frozen fluid formation in the tank 30 starts on the external surface of the evaporator 24 causing a reduction in the heat exchange between the refrigerant and the fluid in the tank 30. The thicker is the layer of frozen fluid on the external surface of the evaporator 24, the lower is the heat exchanged so that the evaporation temperature within the evaporator 24 decreases, thereby decreasing the temperature detected by the sensor 38. When the temperature reaches the "first temperature" or the "second temperature" the control unit 60 is adapted to intervene as explained above.

When the heat pump 20 is switched off before a desired temperature is reached by the water to be used in the chamber 10, the control unit 60 is preferably configured to switch the electrical heater on till the desired temperature is reached by said water.

In a preferred embodiment, the control unit 60 is configured to perform a further fluid regeneration cycle any time the heat pump 20 is switched off or when a predetermined condition is met at the switching off of the heat pump 20. For example, the fluid regeneration cycle can be performed when the heat pump 20 has been switched off due to the second level of fluid freezing reached within the tank 30.

In a preferred embodiment, when a fluid regeneration cycle is performed after the heat pump switched off, a full regeneration of the cooled/frozen fluid is performed in the tank 30.

For example, full regeneration can be performed by first supplying a predetermined amount of tap water into the tank (in an embodiment this step could be preceded by a step of draining away at least part of the fluid from the tank); then, after a proper time, by draining away all or part of the fluid from the tank; and then supplying again tap water into the tank. These steps could be repeated several times until the frozen fluid in the tank has been completely melted and the fluid has reached again the starting temperature. The time between water supplying and water draining is preferably set based on the time required to transfer energy from the supplied tap water to the cooled/frozen fluid. This time could be set based on feedbacks from suitable sensor(s) (e.g. sensor 38) that detect the status of the energy capacity of the fluid in the tank 30: when thermal equilibrium inside the tank 30 is reached, the previously supplied tap water is not able anymore to provide energy to regenerate cooled/frozen fluid; therefore it is time to drain away the "exhaust" water and load new tap water from water mains 40 for completing the regeneration of the cooled/frozen fluid.

In a preferred embodiment (shown in dotted lines in figures 1-3), when a further fluid regeneration cycle is performed after the heat pump has been switched off, the fluid regeration cycle is performed by means of the conduit 35, the input 33 and the valve 37 for starting/stopping waste water entry into the tank 30 from the chamber 10. In particular, the fluid regeration cycle is performed by supplying into the tank 30 waste water discharged from the chamber 10 after a process cycle (e.g., washing, pre-washing, rinsing cycles) of the washing machine 1.

This enables the fluid regeneration cycle to be more efficient due to the higher temperature and energy content of the waste water from the chamber with respect to cold tap water from water mains 40 and to reduce tap water consumption.

In this latter embodiment wherein fluid regeneration cycles are performed with waste water, the control unit 60 is preferably configured to make a fluid regeneration/cleaning cycle with tap water from water mains 40 after a predetermined number of fluid regeneration cycles is performed with waste water from the chamber 10; upon a user command; and/or after lapse of a predetermined operation time of the washing machine (e.g. once a year). This advantageously enables to clean the tank from dirt deposition and/or bacteria proliferation that can occur in the tank when waste water from the chamber is used to perform fluid regenarion cycles.

The washing machine 1 can be a washing machine or a washing-drying machine.

The washing machine 1 can be a dish washer or a laundry washer.

In the case of laundry washer the chamber 10 can be a drum, optionally perforated, which is rotatably contained in a tub (not shown).

## Claims

1. Washing machine (1) comprising
- a chamber (10) for receiving goods to be washed,
- a tank (30) adapted to contain a fluid,
- a heat pump (20) comprising a first heat exchanger (22), a second heat exchanger (24), a compressor (26) and a pressure lowering device (28) forming a circuit comprising a refrigerant, the first heat exchanger (22) being thermally coupled with the water to be used in the chamber (10) and being adapted to cool said refrigerant and to heat said water to be used in the chamber (10), the second heat exchanger (24) being thermally coupled to the tank (30) and being adapted to heat said refrigerant and to cool the fluid contained in the tank (30),
- the tank (30) is fluidly connected to water mains (40) by means of a conduit configured so as to supply tap water from the water mains (40) to the tank (30) bypassing the chamber (10), and
- the washing machine (1) further comprises a control unit (60) configured to carry out a fluid regeneration cycle in the tank (30) by managing entry of tap water from the water mains (40) into the tank (30) when a predetermined regeneration condition is met,
**characterized in that**:
if said predetermined regeneration condition is met a number N of times during a same operation cycle of the heat pump, the control unit (60) is configured to disable fluid regeneration till said same operation cycle is terminated, whereby the number of fluid regeneration cycles that can be performed during a same operation cycle of the heat pump (20) is limited to N, with N integer at least equal to 1.

2. Washing machine (1) according to claim 1, wherein the control unit (60) is configured to carry out said fluid regeneration cycle by controlling exit of at least part of the fluid from the tank (30).

3. Washing machine (1) according to claim 1, wherein said regeneration condition is selected from the group comprising the following regeneration conditions: reaching a first level of fluid freezing within the tank (30), lapse of a predetermined heat pump operation time and reaching a predetermined temperature level by the water to be used in the chamber (10).

4. Washing machine (1) according to claim 3, wherein said first level of fluid freezing corresponds to a situation wherein the fluid is partially frozen within the tank (30).

5. Washing machine (1) according to claim 1, wherein said predetermined regeneration condition is set so that the fluid regeneration cycle is performed during an operation cycle of the heat pump (20).

6. Washing machine (1) according to claim 1, wherein the control unit (60) is configured to operate the heat pump (20) till a predetermined operating condition is met, selected from the group comprising the following operating conditions: desired temperature reached by the water to be used in the chamber (10); second level of fluid freezing reached within the tank (30); predetermined temperature value reached by the refrigerant in a portion of the circuit of the heat pump (20) between the compressor outlet and the pressure lowering device input; and end of predetermined operation time

7. Washing machine (1) according to claim 6, wherein the control unit (60) is configured to operate the heat pump (20) till a first one of at least two of said operating conditions is met.

8. Washing machine (1) according to claim 6, wherein said second level of fluid freezing corresponds to a situation wherein the fluid is almost completely frozen within the tank (30).

9. Washing machine (1) according to claims 3 and 6, wherein said second level of fluid freezing is equal to or different from said first level of fluid freezing.

10. Washing machine (1) according to claim 1, wherein the control unit (60) is configured to perform a further fluid regeneration cycle after the heat pump (20) is switched off.

11. Washing machine (1) according to claim 10, wherein the control unit (60) is configured to perform said further fluid regeneration cycle each time the heat pump (20) is switched off or if a predetermined condition is met at the switching off of the heat pump (20).

12. Washing machine (1) according to claim 10 or 11, wherein the tank (30) is fluidly connected to the chamber (10) and the control unit (60) is configured to perform said further fluid regeneration cycle by managing entry of waste water from the chamber (10).

13. Washing machine (1) according to claim 10 or 11, wherein the control unit (60) is configured to perform said further fluid regeneration cycle by managing entry of tap water from water mains (40).

14. Washing machine (1) according to claim 1, further comprising at least one sensor (38) configured to detect frozen fluid formation within the tank (30) selected from the group comprising: a level sensor configured to detect the level of the fluid within the tank (30); a temperature sensor configured to detect the temperature of the fluid at a suitable position within the tank (30); an electrical conductivity sensor configured to detect the electrical conductivity of the fluid at a suitable position within the tank (30); and a temperature sensor configured to detect the temperature of the refrigerant flowing through the second heat exchanger (24).

15. Washing machine (1) according to claim 6, further comprising at least one temperature sensor (23) configured to detect the temperature of the refrigerant in said portion of the circuit between the compressor outlet and the pressure lowering device input.

16. Washing machine (1) according to claim 15, wherein said at least one temperature sensor is positioned at the outlet of the compressor (26) and/or at the outlet of the first heat exchanger (22).

17. Washing machine (1) according to claim 1, further comprising a heater, the control unit (60) being configured to switch the electrical heater on till a desired temperature is reached by the water to be used in the chamber (10), if the heat pump (20) is switched off before said desired temperature is reached.

18. Method of fluid regeneration in a washing machine (1) comprising a chamber for receiving goods to be washed, a fluid tank (30), and a heat pump (20) comprising a first heat exchanger (22), a second heat exchanger (24), a compressor (26) and a pressure lowering device (28) forming a circuit comprising a refrigerant, the method comprising:
- operating the heat pump (20) so as to cool said refrigerant and to heat water to be used in the chamber (10) by means of said first heat exchanger (22), and to heat said refrigerant and to cool the fluid contained in the tank (30) by means of the second heat exchanger (24),
- carrying out a fluid regeneration cycle for regenerating the cooled fluid in the tank (30) by supplying tap water from water mains (40) into the tank (30) bypassing the chamber (10) when a predetermined regeneration condition is met, and
- if said predetermined regeneration condition is met a number N of times during a same operation cycle of the heat pump (20), disabling fluid regeneration till said same operation cycle is terminated whereby limiting to N the number of fluid regeneration cycles that can be performed during a same operation cycle of the heat pump (20), with N integer at least equal to 1.

19. Method according to claim 18, wherein the heat pump (20) is operated till a predetermined operating condition is met, selected from the group comprising the following operating conditions: desired temperature reached by the water to be used in the chamber (10); second level of fluid freezing reached within the tank (30); predetermined temperature value reached by the refrigerant in a portion of the circuit of the heat pump (20) between the compressor outlet and the pressure lowering device input; and end of predetermined operation time.

20. Method according to claim 18, comprising detecting frozen fluid formation within the tank (30) by: detecting the level of the fluid within the tank (30), or by detecting the temperature of the fluid at a suitable position within the tank (30), or by detecting the electrical conductivity of the fluid at a suitable position within the tank (30), or by detecting the temperature of the refrigerant flowing through the second heat exchanger (24).

## Patentansprüche

1. Waschmaschine (1), die Folgendes umfasst
- eine Kammer (10) zum Aufnehmen von zu waschenden Gütern,
- einen Tank (30), dazu angepasst, eine Flüssigkeit zu enthalten,
- eine Wärmepumpe (20), umfassend einen ersten Wärmetauscher (22), einen zweiten Wärmetauscher (24), einen Verdichter (26) und eine Druckminderungsvorrichtung (28), einen Kreislauf bildend, der ein Kältemittel umfasst, wobei der erste Wärmetauscher (22) thermisch mit dem in der Kammer (10) zu verwendenden Wasser gekoppelt ist und dazu angepasst ist, das Kältemittel zu kühlen und das in der Kammer (10) zu verwendende Wasser zu erwärmen, wobei der zweite Wärmetauscher (24) thermisch mit dem Tank (30) gekoppelt ist und dazu angepasst ist, das Kältemittel zu erwärmen und die im Tank (30) enthaltene Flüssigkeit zu kühlen,
- wobei der Tank (30) fluidisch mit der Wasserhauptleitung (40) über eine Leitung verbunden ist, die dazu ausgelegt ist, unter Umgehung der Kammer (10) Leitungswasser von der Wasserhauptleitung (40) zum Tank (30) zu leiten, und
- wobei die Waschmaschine (1) ferner eine Steuereinheit (60) umfasst, die dazu ausgelegt ist, einen Flüssigkeitsregenerierungszyklus im Tank (30) durchzuführen durch Verwalten des Eintritts von Leitungswasser von der Wasserhauptleitung (40) in den Tank (30), wenn eine vorbestimmte Regenerierungsbedingung erfüllt ist,
**dadurch gekennzeichnet, dass**:
wenn die vorbestimmte Regenerierungsbedingung eine Anzahl von N Malen während eines gleichen Betriebszyklus der Wärmepumpe erfüllt ist, die Steuereinheit (60) dazu ausgelegt ist, Flüssigkeitsregenerierung zu deaktivieren, bis der gleiche Betriebszyklus beendet ist, wobei die Anzahl von Flüssigkeitsregenerierungszyklen, die während eines gleichen Betriebszyklus der Wärmepumpe (20) durchgeführt werden können, auf N beschränkt ist, wobei N eine ganze Zahl mindestens gleich 1 ist.

2. Waschmaschine (1) nach Anspruch 1, wobei die Steuereinheit (60) dazu ausgelegt ist, den Flüssigkeitsregenerierungszyklus durchzuführen durch Steuern des Austritts von zumindest einem Teil der Flüssigkeit aus dem Tank (30).

3. Waschmaschine (1) nach Anspruch 1, wobei die Regenerierungsbedingung aus der Gruppe ausgewählt wird, die die folgenden Regenerierungsbedingungen umfasst: Erreichen eines ersten Niveaus von gefrierender Flüssigkeit im Tank (30), Ablaufen einer vorbestimmten Wärmepumpenbetriebszeit und Erreichen eines vorbestimmten Temperaturniveaus durch das in der Kammer (10) zu verwendende Wasser.

4. Waschmaschine (1) nach Anspruch 3, wobei das erste Niveau von gefrierender Flüssigkeit einer Situation entspricht, in der die Flüssigkeit im Tank (30) teilweise gefroren ist.

5. Waschmaschine (1) nach Anspruch 1, wobei die vorbestimmte Regenerierungsbedingung so festgelegt ist, dass der Flüssigkeitsregenerierungszyklus während eines Betriebszyklus der Wärmepumpe (20) durchgeführt wird.

6. Waschmaschine (1) nach Anspruch 1, wobei die Steuereinheit (60) dazu ausgelegt ist, die Wärmepumpe (20) zu betreiben, bis eine vorbestimmte Betriebsbedingung erfüllt ist, die aus der Gruppe ausgewählt wird, die die folgenden Betriebsbedingungen umfasst: gewünschte Temperatur durch das in der Kammer (10) zu verwendende Wasser erreicht; zweites Niveau von gefrierender Flüssigkeit im Tank (30) erreicht; vorbestimmter Temperaturwert durch das Kältemittel in einem Teil des Kreislaufs der Wärmepumpe (20) zwischen dem Verdichterauslass und dem Eingang der Druckminderungsvorrichtung erreicht; und Ende der vorbestimmten Betriebszeit.

7. Waschmaschine (1) nach Anspruch 6, wobei die Steuereinheit (60) dazu ausgelegt ist, die Wärmepumpe (20) zu betreiben, bis eine erste von mindestens zwei der Betriebsbedingungen erfüllt ist.

8. Waschmaschine (1) nach Anspruch 6, wobei das zweite Niveau von gefrierender Flüssigkeit einer Situation entspricht, in der die Flüssigkeit im Tank (30) beinahe vollständig gefroren ist.

9. Waschmaschine (1) nach Ansprüchen 3 und 6, wobei das zweite Niveau von gefrierender Flüssigkeit gleich oder verschieden von dem ersten Niveau von gefrierender Flüssigkeit ist.

10. Waschmaschine (1) nach Anspruch 1, wobei die Steuereinheit (60) dazu ausgelegt ist, einen weiteren Flüssigkeitsregenerierungszyklus durchzuführen, nachdem die Wärmepumpe (20) ausgeschaltet wird.

11. Waschmaschine (1) nach Anspruch 10, wobei die Steuereinheit (60) dazu ausgelegt ist, den weiteren Flüssigkeitsregenerierungszyklus jedes Mal durchzuführen, wenn die Wärmepumpe (20) ausgeschaltet wird oder wenn beim Ausschalten der Wärmepumpe (20) eine vorbestimmte Bedingung erfüllt ist.

12. Waschmaschine (1) nach Anspruch 10 oder 11, wobei der Tank (30) fluidisch mit der Kammer (10) verbunden ist und die Steuereinheit (60) dazu ausgelegt ist, den weiteren Flüssigkeitsregenerierungszyklus durchzuführen durch Verwalten des Eintritts von Abwasser aus der Kammer (10) .

13. Waschmaschine (1) nach Anspruch 10 oder 11, wobei die Steuereinheit (60) dazu ausgelegt ist, den weiteren Flüssigkeitsregenerierungszyklus durchzuführen durch Verwalten des Eintritts von Leitungswasser aus der Wasserhauptleitung (40).

14. Waschmaschine (1) nach Anspruch 1, ferner umfassend zumindest einen Sensor (38), dazu ausgelegt, Bildung von gefrorener Flüssigkeit im Tank (30) zu detektieren, ausgewählt aus der Gruppe, die Folgendes umfasst: einen Füllstandssensor, dazu ausgelegt, den Füllstand der Flüssigkeit im Tank (30) zu detektieren; einen Temperatursensor, dazu ausgelegt, die Temperatur der Flüssigkeit an einer geeigneten Position im Tank (30) zu detektieren; einen elektrischen Leitfähigkeitssensor, dazu ausgelegt, die elektrische Leitfähigkeit der Flüssigkeit an einer geeigneten Position im Tank (30) zu detektieren; und einen Temperatursensor, dazu ausgelegt, die Temperatur des Kältemittels zu detektieren, das durch den zweiten Wärmetauscher (24) strömt.

15. Waschmaschine (1) nach Anspruch 6, ferner umfassend zumindest einen Temperatursensor (23), dazu ausgelegt, die Temperatur des Kältemittels in dem Teil des Kreislaufs zwischen dem Verdichterauslass und dem Eingang der Druckminderungsvorrichtung zu detektieren.

16. Waschmaschine (1) nach Anspruch 15, wobei der zumindest eine Temperatursensor am Auslass des Verdichters (26) und/oder am Auslass des ersten Wärmetauschers (22) positioniert ist.

17. Waschmaschine (1) nach Anspruch 1, ferner umfassend einen Heizer, wobei die Steuereinheit (60) dazu ausgelegt ist, den elektrischen Heizer einzuschalten, bis eine gewünschte Temperatur durch das in der Kammer (10) zu verwendende Wasser erreicht ist, wenn die Wärmepumpe (20) ausgeschaltet wird, bevor die gewünschte Temperatur erreicht ist.

18. Verfahren zur Flüssigkeitsregenerierung in einer Waschmaschine (1), umfassend eine Kammer zum Aufnehmen von zu waschenden Gütern, einen Flüssigkeitstank (30) und eine Wärmepumpe (20), umfassend einen ersten Wärmetauscher (22), einen zweiten Wärmetauscher (24), einen Verdichter (26) und eine Druckminderungsvorrichtung (28), einen Kreislauf bildend, der ein Kältemittel umfasst, wobei das Verfahren Folgendes umfasst:
- Betreiben der Wärmepumpe (20), um mittels des ersten Wärmetauschers (22) das Kältemittel zu kühlen und das in der Kammer (10) zu verwendende Wasser zu erwärmen und mittels des zweiten Wärmetauschers (24) das Kältemittel zu erwärmen und die im Tank (30) enthaltene Flüssigkeit zu kühlen,
- Ausführen eines Flüssigkeitsregenerierungszyklus zum Regenerieren der gekühlten Flüssigkeit im Tank (30) durch Zuführen von Leitungswasser aus der Wasserhauptleitung (40) in den Tank (30) unter Umgehung der Kammer (10), wenn eine vorbestimmte Regenerierungsbedingung erfüllt ist, und
- wenn die vorbestimmte Regenerierungsbedingung eine Anzahl von N Malen während eines gleichen Betriebszyklus der Wärmepumpe (20) erfüllt ist, Deaktivieren der Flüssigkeitsregenerierung, bis der gleiche Betriebszyklus beendet ist, dabei die Anzahl von Flüssigkeitsregenerierungszyklen, die während eines gleichen Betriebszyklus der Wärmepumpe (20) durchgeführt werden können, auf N beschränkend, wobei N eine ganze Zahl mindestens gleich 1 ist.

19. Verfahren nach Anspruch 18, wobei die Wärmepumpe (20) betrieben wird, bis eine vorbestimmte Betriebsbedingung erfüllt ist, die aus der Gruppe ausgewählt wird, die die folgenden Betriebsbedingungen umfasst: gewünschte Temperatur durch das in der Kammer (10) zu verwendende Wasser erreicht; zweites Niveau von gefrierender Flüssigkeit im Tank (30) erreicht; vorbestimmter Temperaturwert durch das Kältemittel in einem Teil des Kreislaufs der Wärmepumpe (20) zwischen dem Verdichterauslass und dem Eingang der Druckminderungsvorrichtung erreicht; und Ende der vorbestimmten Betriebszeit.

20. Verfahren nach Anspruch 18, umfassend Detektieren einer Bildung von gefrorener Flüssigkeit im Tank (30) durch: Detektieren des Füllstands der Flüssigkeit im Tank (30), oder durch Detektieren der Temperatur der Flüssigkeit an einer geeigneten Position im Tank (30), oder durch Detektieren der elektrischen Leitfähigkeit der Flüssigkeit an einer geeigneten Position im Tank (30), oder durch Detektieren der Temperatur des Kältemittels, das durch den zweiten Wärmetauscher (24) strömt.

## Revendications

1. Machine (1) à laver comportant
- une chambre (10) destinée à recevoir des articles à laver,
- une cuve (30) prévue pour contenir un fluide,
- une pompe (20) à chaleur comportant un premier échangeur (22) de chaleur, un deuxième échangeur (24) de chaleur, un compresseur (26) et un dispositif (28) abaissant la pression formant un circuit comportant un agent frigorigène, le premier échangeur (22) de chaleur étant couplé thermiquement à l'eau devant être utilisée dans la chambre (10) et étant prévu pour refroidir ledit agent frigorigène et pour chauffer ladite eau devant être utilisée dans la chambre (10), le deuxième échangeur (24) de chaleur étant couplé thermiquement à la cuve (30) et étant prévu pour chauffer ledit agent frigorigène et pour refroidir le fluide contenu dans la cuve (30),
- la cuve (30) étant reliée fluidiquement à un réseau (40) d'eau au moyen d'un conduit configuré de façon à fournir de l'eau du robinet provenant du réseau (40) d'eau à la cuve (30) en contournant la chambre (10), et
- la machine (1) à laver comportant en outre une unité (60) de commande configurée pour réaliser un cycle de régénération de fluide dans la cuve (30) en gérant l'entrée d'eau du robinet provenant du réseau (40) d'eau dans la cuve (30) lorsqu'une condition prédéterminée de régénération est remplie,
**caractérisée en ce que** :
si ladite condition prédéterminée de régénération est remplie un nombre N de fois pendant un même cycle de fonctionnement de la pompe à chaleur, l'unité (60) de commande est configurée pour désactiver la régénération de fluide jusqu'à ce que ledit même cycle de fonctionnement soit arrêté, le nombre de cycles de régénération de fluide qui peuvent être effectués pendant un même cycle de fonctionnement de la pompe (20) à chaleur étant ainsi limité à N, N étant un entier au moins égal à 1.

2. Machine (1) à laver selon la revendication 1, l'unité (60) de commande étant configurée pour réaliser ledit cycle de régénération de fluide en commandant la sortie d'au moins une partie du fluide de la cuve (30).

3. Machine (1) à laver selon la revendication 1, ladite condition de régénération étant choisie dans le groupe comportant les conditions de régénération suivantes : atteinte d'un premier niveau de congélation de fluide à l'intérieur de la cuve (30), expiration d'un temps prédéterminé de fonctionnement de la pompe à chaleur et atteinte d'un niveau prédéterminé de température par l'eau devant être utilisée dans la chambre (10).

4. Machine (1) à laver selon la revendication 3, ledit premier niveau de congélation de fluide correspondant à une situation où le fluide est partiellement gelé à l'intérieur de la cuve (30).

5. Machine (1) à laver selon la revendication 1, ladite condition prédéterminée de régénération étant spécifiée de telle façon que le cycle de régénération de fluide soit effectué pendant un cycle de fonctionnement de la pompe (20) à chaleur.

6. Machine (1) à laver selon la revendication 1, l'unité (60) de commande étant configurée pour faire fonctionner la pompe (20) à chaleur jusqu'à ce qu'une condition prédéterminée de fonctionnement soit remplie, choisie dans le groupe comportant les conditions de fonctionnement suivantes : température souhaitée atteinte par l'eau devant être utilisée dans la chambre (10) ; deuxième niveau de congélation de fluide atteint à l'intérieur de la cuve (30) ; valeur prédéterminée de température atteinte par l'agent frigorigène dans une partie du circuit de la pompe (20) à chaleur entre la sortie du compresseur et l'entrée du dispositif abaissant la pression ; et fin du temps prédéterminé de fonctionnement.

7. Machine (1) à laver selon la revendication 6, l'unité (60) de commande étant configurée pour faire fonctionner la pompe (20) à chaleur jusqu'à ce qu'une première condition parmi au moins deux desdites conditions de fonctionnement soit remplie.

8. Machine (1) à laver selon la revendication 6, ledit deuxième niveau de congélation de fluide correspondant à une situation où le fluide est presque entièrement gelé à l'intérieur de la cuve (30).

9. Machine (1) à laver selon les revendications 3 et 6, ledit deuxième niveau de congélation de fluide étant égal audit premier niveau de congélation de fluide ou différent de celui-ci.

10. Machine (1) à laver selon la revendication 1, l'unité (60) de commande étant configurée pour effectuer un cycle supplémentaire de régénération de fluide après que la pompe (20) à chaleur a été éteinte.

11. Machine (1) à laver selon la revendication 10, l'unité (60) de commande étant configurée pour effectuer ledit cycle supplémentaire de régénération de fluide chaque fois que la pompe (20) à chaleur est éteinte ou si une condition prédéterminée est remplie à l'extinction de la pompe (20) à chaleur.

12. Machine (1) à laver selon la revendication 10 ou 11, la cuve (30) étant reliée fluidiquement à la chambre (10) et l'unité (60) de commande étant configurée pour effectuer ledit cycle supplémentaire de régénération de fluide en gérant l'entrée d'eau usée provenant de la chambre (10).

13. Machine (1) à laver selon la revendication 10 ou 11, l'unité (60) de commande étant configurée pour effectuer ledit cycle supplémentaire de régénération de fluide en gérant l'entrée d'eau du robinet provenant du réseau (40) d'eau.

14. Machine (1) à laver selon la revendication 1, comportant en outre au moins un capteur (38) configuré pour détecter la formation de fluide gelé à l'intérieur de la cuve (30), choisi dans le groupe comportant : un capteur de niveau configuré pour détecter le niveau du fluide à l'intérieur de la cuve (30) ; un capteur de température configuré pour détecter la température du fluide dans une position appropriée à l'intérieur de la cuve (30) ; un capteur de conductivité électrique configuré pour détecter la conductivité électrique du fluide dans une position appropriée à l'intérieur de la cuve (30) ; et un capteur de température configuré pour détecter la température de l'agent frigorigène s'écoulant à travers le deuxième échangeur (24) de chaleur.

15. Machine (1) à laver selon la revendication 6, comportant en outre au moins un capteur (23) de température configuré pour détecter la température de l'agent frigorigène dans ladite partie du circuit entre la sortie du compresseur et l'entrée du dispositif abaissant la pression.

16. Machine (1) à laver selon la revendication 15, ledit ou lesdits capteurs de température étant positionnés à la sortie du compresseur (26) et/ou à la sortie du premier échangeur (22) de chaleur.

17. Machine (1) à laver selon la revendication 1, comportant en outre un élément chauffant, l'unité (60) de commande étant configurée pour allumer l'élément chauffant électrique jusqu'à ce qu'une température souhaitée soit atteinte par l'eau devant être utilisée dans la chambre (10), si la pompe (20) à chaleur est éteinte avant que ladite température souhaitée soit atteinte.

18. Procédé de régénération de fluide dans une machine (1) à laver comportant un chambre destinée à recevoir des articles à laver, une cuve (30) à fluide, et une pompe (20) à chaleur comportant un premier échangeur (22) de chaleur, un deuxième échangeur (24) de chaleur, un compresseur (26) et un dispositif (28) abaissant la pression formant un circuit comportant un agent frigorigène, le procédé comportant les étapes consistant à :
- faire fonctionner la pompe (20) à chaleur de façon à refroidir ledit agent frigorigène et à chauffer de l'eau devant être utilisée dans la chambre (10) au moyen dudit premier échangeur (22) de chaleur, et à chauffer ledit agent frigorigène et à refroidir le fluide contenu dans la cuve (30) au moyen du deuxième échangeur (24) de chaleur,
- réaliser un cycle de régénération de fluide destiné à régénérer le fluide refroidi dans la cuve (30) en amenant de l'eau du robinet provenant d'un réseau (40) d'eau dans la cuve (30) en contournant la chambre (10) lorsqu'une condition prédéterminée de régénération est remplie, et
- si ladite condition prédéterminée de régénération est remplie un nombre N de fois pendant un même cycle de fonctionnement de la pompe (20) à chaleur, désactiver la régénération de fluide jusqu'à ce que ledit même cycle de fonctionnement soit arrêté, limitant ainsi à N le nombre de cycles de régénération de fluide qui peuvent être effectués pendant un même cycle de fonctionnement de la pompe (20) à chaleur, N étant un entier au moins égal à 1.

19. Procédé selon la revendication 18, la pompe (20) à chaleur étant mise en fonctionnement jusqu'à ce qu'une condition prédéterminée de fonctionnement soit remplie, choisie dans le groupe comportant les conditions de fonctionnement suivantes : température souhaitée atteinte par l'eau devant être utilisée dans la chambre (10) ; deuxième niveau de congélation de fluide atteint à l'intérieur de la cuve (30) ; valeur prédéterminée de température atteinte par l'agent frigorigène dans une partie du circuit de la pompe (20) à chaleur entre la sortie du compresseur et l'entrée du dispositif abaissant la pression ; et fin du temps prédéterminé de fonctionnement.

20. Procédé selon la revendication 18, comportant la détection de la formation de fluide gelé à l'intérieur de la cuve (30) en : détectant le niveau du fluide à l'intérieur de la cuve (30), ou en détectant la température du fluide dans une position appropriée à l'intérieur de la cuve (30), ou en détectant la conductivité électrique du fluide dans une position appropriée à l'intérieur de la cuve (30), ou en détectant la température de l'agent frigorigène s'écoulant à travers le deuxième échangeur (24) de chaleur.
